# EUROPÄISCHE PATENTSCHRIFT

(11) **EP 3 507 526 B1**
(45) Veröffentlichungstag und Bekanntmachung des Hinweises auf die Patenterteilung: **20.07.2022**
(21) Anmeldenummer: 17761049.0
(22) Anmeldetag: 22.08.2017
(51) Int. Cl.: F16H 57/08

(54) **PLANETENGETRIEBE**
PLANETARY GEAR UNIT
TRAIN ÉPICYCLOÏDAL

(30) Priorität: 02.09.2016 EP 16187064
(43) Veröffentlichungstag der Anmeldung: 10.07.2019
(73) Patentinhaber: Flender GmbH, 46395 Bocholt (DE)
(72) Erfinder: MEYER, Thomas, 52223 Stolberg (DE)
(74) Vertreter: Michalski Hüttermann & Partner Patentanwälte mbB
(86) Internationale Anmeldenummer: PCT/EP2017/071140
(87) Internationale Veröffentlichungsnummer: WO 2018/041671

(56) Entgegenhaltungen:
- EP-A1- 2 383 480
- EP-A1- 3 091 255
- DE-A1-102014 205 980
- DE-A1-102014 214 331

## Beschreibung

Die vorliegende Erfindung betrifft ein Planetengetriebe, insbesondere für eine Windkraftanlage, mit einem Getriebegehäuse, einem zentralen Sonnenrad, das in dem Getriebegehäuse um eine zentrale Getriebedrehachse rotierbar gehalten ist und eine Außenverzahnung trägt, einem Hohlrad, das konzentrisch zu der zentralen Getriebedrehachse in dem Getriebegehäuse angeordnet ist und eine Innenverzahnung aufweist, einem Planetenträger, der in dem Getriebegehäuse um die zentrale Getriebedrehachse drehbar gelagert ist, und mehreren Planetenrädern, die mittels als Gleitlager ausgestalteter Planetenradlager an dem Planetenträger um Planetenraddrehachsen drehbar gelagert sind und Außenverzahnungen aufweisen, die mit der Innenverzahnung des Hohlrads und der Außenverzahnung des Sonnenrads in Eingriff stehen.

Derartige Planetengetriebe dienen beispielsweise als Übersetzungsgetriebe der Übersetzung einer niedrigen Drehzahl einer Antriebswelle des Planetengetriebes in eine deutlich höhere Drehzahl einer Abtriebswelle des Planetengetriebes. Dementsprechend sind Planetengetriebe häufig in Windkraftanlagen verbaut, wo eine niedrige Drehzahl der Rotorwelle in eine deutlich höhere Drehzahl der Generatorwelle übersetzt wird. Bei der Verwendung in Windkraftanlagen werden Planetengetriebe aufgrund der variablen Windverhältnisse überwiegend unter stark wechselnden Betriebsbedingungen betrieben. Infolge zeitweilig äußerst niedriger Drehzahlen der Antriebswelle und gleichzeitig extrem hoher Krafteinwirkung auf die Lager können in Planetengetrieben für Windkraftanlagen Wälzlager zur Lagerung der Planetenräder verbaut werden.

Alternativ dazu können Planetenradlager in Planetengetrieben für Windkraftanlagen aber auch als Gleitlager ausgebildet sein. Ein derartiges Planetengetriebe für eine Windkraftanlage ist beispielsweise in der EP 2 383 480 A1 beschrieben und weist ein Getriebegehäuse, in dem ein zentrales Sonnenrad mit einer Außenverzahnung um eine zentrale Getriebedrehachse drehbar gehalten ist auf. Weiterhin ist in dem Getriebegehäuse konzentrisch zu der zentralen Getriebedrehachse ein Hohlrad mit einer Innenverzahnung vorgesehen. Ebenfalls in dem Getriebegehäuse ist ein Planetenträger um die zentrale Getriebedrehachse drehbar gelagert. An dem Planetenträger sind mehrere Planetenräder gehalten. Die Planetenräder weisen Außenverzahnungen auf, die mit der Innenverzahnung des Hohlrads und der Außenverzahnung des Sonnenrads in Eingriff stehen.

Die Planetenräder sind an als Radialgleitlager ausgestalteten Planetenradlagern um Planetenraddrehachsen drehbar gelagert. Für einen zuverlässigen Betrieb eines Radialgleitlagers muss dessen Lagerspiel auch berücksichtigen, dass während des Betriebs des Radialgleitlagers temperatur- und/oder belastungsbedingte Ausdehnungen und/oder Verformungen auftreten können. Daher müssen die Bauteile des Radialgleitlagers und/oder die Laufflächen der gelagerten Planetenräder mit hoher Präzision, also geringen Fertigungstoleranzen hergestellt werden und/oder bei der Montage nachbearbeitet werden, was mit hohen Kosten einhergeht.

Während des Betriebs des Radialgleitlagers verändert sich das Lagerspiel infolge von Verschleiß allmählich, was zu einer Fehlfunktion oder einem Ausfall des Radialgleitlagers führen kann. Daher ist eine regelmäßige Wartung und ggf. ein Austausch des Radialgleitlagers erforderlich, wenn das Lagerspiel des Radialgleitlagers einen zulässigen Bereich zu verlassen droht. Dies geht insbesondere bei der Verwendung in Windkraftanlagen mit entsprechenden Stillstandzeiten einher.

Radialgleitlager können ausschließlich radiale Kräfte ableiten. Um die Planetenräder auch axial zu führen und axiale Bewegungen der Planetenräder zu verhindern, sind ergänzend Axialgleitlager erforderlich, die auf die Planetenräder wirkende axiale Kräfte ableiten. Solche Axialgleitlager können beispielsweise im Kontaktbereich zwischen Wangen des Planetenträgers und Stirnseiten der Planetenräder ausgebildet sein und erhöhen ebenfalls die Kosten derartiger Planetenradlager.

Während des Betriebs des Planetengetriebes kann es auch zu Verspannungen kommen, wenn sich ein Lagerspiel veränderte. Dies kann dann wiederum zu einem erhöhten Verschleiß und zu einem größeren Lagerspiel führen.

Aus der DE 10 2014 214 331 A1 ist ein Planetengetriebe, mit einem Planetenradträger mit zwei parallel zueinander verlaufenden Seitenwänden mit daran einander gegenüberliegenden Axialbohrungen bekannt, wobei zwischen den Seitenwänden ein oder mehrere Planetenräder drehbar angeordnet sind. Dieses Planetengetriebe zeichnet sich dadurch aus, dass am Planetenrad beidseits der Drehlagerung dienende Kegelzapfen vorgesehen sind, dass die Axialbohrungen als Kegelbohrungen aufgeführt sind, und dass jeder Kegelzapfen in der Kegelbohrung über ein schräges Walzlager drehgelagert ist.

Aus der EP 3091255 A1 ist ein Planetengetriebe, insbesondere für eine Windkraftanlage, mit einem Getriebegehäuse, einem zentralen Sonnenrad, das in dem Getriebegehäuse um eine zentrale Getriebedrehachse rotierbar gehalten ist und eine Außenverzahnung trägt, bekannt. Ein Hohlrad ist konzentrisch zu der zentralen Getriebedrehachse in dem Getriebegehäuse angeordnet. Mehreren Planetenrädern sind mittels als Gleitlager ausgestalteter Planetenträger um Planetenraddrehachsen drehbar gelagert. Jedes Planetenradlager umfasst zwei ringförmige Lagerkörper, die von einer Planetenradachse durchsetzt und an dieser drehfest gehalten sind und an deren äußeren Umgangsflächen kegelmantelförmige Gleitflächen derart ausgebildet sind, dass die verjüngten Enden der Lagerkörper zueinander weisen, wobei an inneren Umfangsflächen des Planetenrads zu den Gleitflächen des Planetenradlagers korrespondierende Laufflächen ausgebildet sind.

Aus der EP 2383480 A1 ist ein Planetengetriebe für eine Windkraftanlage bekannt, welches neben einem Sonnenrad, einem Hohlrad und einem Planetenträger, in dem mehrere Planetenräder gelagert sind, mehrere Radialgleitlager zur Lagerung der Planetenräder umfasst. Die Radialgleitlager umfassen jeweils eine Hülse aus einem Gleitlagerwerkstoff, die entweder als Innenring auf einer Planetenradachse befestigt oder als Außenring in einer Bohrung eines Planetenrades montiert sind. Dabei ist ein zugehöriger Lageraußen- oder Lagerinnenring entweder durch die Bohrung des Planetenrades oder durch die Planetenradachse gebildet. Außerdem sind mehrere Axialgleitlager zur Lagerung der Planetenräder vorgesehen, die jeweils ein erstes Lagerelement aus einem Gleitlagerwerkstoff umfassen. Der Gleitlagerwerkstoff ist an einer Kontaktfläche zwischen einer Planetenträgerwange und einer Stirnseite eines Planetenrades entweder auf die Planetenträgerwange oder auf die Stirnseite des Planetenrades aufgebracht. Ein zugehöriges zweites Lagerelement ist entweder durch die Stirnseite des Planeten oder durch die Planetenträgerwange gebildet.

Eine Aufgabe der vorliegenden Erfindung ist es, ein Planetengetriebe zu schaffen, welches insbesondere der eingangs genannten Art entspricht, welches einen einfachen Aufbau ermöglicht, wenig Verschleiß aufweist und/oder einfach zu handhaben ist, wobei insbesondere das Lagerspiel eingesetzter Gleitlager leicht einzustellen ist.

Eine Lösung der Aufgabe gelingt bei einem Planetengetriebe nach Anspruch 1. Ausgestaltungen des Planetengetriebes ergeben sich gemäß der Ansprüche 2 bis 23.

Ein Planetengetriebe, insbesondere für eine Windkraftanlage, mit einem Getriebegehäuse, weist ein zentrales Sonnenrad, das in dem Getriebegehäuse um eine zentrale Getriebedrehachse rotierbar gehalten ist und eine Außenverzahnung trägt, ein Hohlrad auf, das konzentrisch zu der zentralen Getriebedrehachse in dem Getriebegehäuse angeordnet ist und eine Innenverzahnung hat. Das Planetengetriebe weist insbesondere einen einwangigen Planetenträger auf, der in dem Getriebegehäuse um die zentrale Getriebedrehachse drehbar gelagert ist, und mehreren Planetenrädern, die mittels als Gleitlager ausgestalteter Planetenradlager an dem Planetenträger um Planetenraddrehachsen drehbar gelagert sind und Außenverzahnungen aufweisen, die mit der Innenverzahnung des Hohlrads und der Außenverzahnung des Sonnenrads in Eingriff stehen. Der einwangige Planetenträger weist gegenüber dem zweiwangigen Planetenträger nur eine Wange auf. Der zweiwangige Planetenträger weist auf beiden Seiten der in einer Ebene angeordneten Planetenräder Wangen auf, welche die Planetenräder tragen bzw. führen.

Beim einwangigen Planetenträger ist die Planetenradachse nur über genau einem Träger auf genau einer Stirnseite des Planetenrades getragen. Dies trifft insbesondere auf alle Planetenräder des Planetengetriebes zu.

Beim einwangigen Planetenträger ist das Planetenrad nur über diesen einen Planetenträger gehalten.

Beim einwangigen Planetenträger stützt sich das Planetenrad auf nur einer Welle, insbesondere der Antriebswelle oder der Abtriebswelle des Getriebes, ab.

Beim einwangigen Planetenträger sind die Planetenräder nur durch einen Träger auf nur einer Stirnseite der Planetenräder gehalten.

Bei einem Getriebe mit einem einwangigen Planetenträger ist auf einer Stirnseite der Planetenräder ein Träger und auf der anderen Stirnseite der Planetenräder kein Träger, so dass es nur den einwangigen Planetenträger als Träger gibt.

Jedes Planetenradlager weist zwei ringförmige Lagerkörper auf, wobei zumindest einer der ringförmigen Lagerkörper von einer Planetenradachse durchsetzt und an dieser drehfest gehalten ist, wobei an den äußeren Umfangsflächen der Lagerkörper kegelmantelförmige Gleitflächen derart ausgebildet sind, dass die verjüngten Enden der Lagerkörper zueinander weisen, und wobei an inneren Umfangsflächen des Planetenrads zu den Gleitflächen des Planetenradlagers korrespondierende Laufflächen ausgebildet sind.

Eine kegelige Planetengleitlagerung lässt sich bei einwangigen wie auch bei zweiwangigen Planetenträgern realisieren. Bei einem zweiwangigen Planetenträger kann es zu einer Verspannung kommen. So kann es sein, dass die Planetenradachse sich zwischen ihren Einspannpunkten in den Wangen durchbiegt. Diese Verformung ist auszugleichen, bzw. durch Versteifungen zu verhindern. Auch kann sich durch eine Torsion des zweiwangigen Planetenträgers eine Planetenradachse windschief zu den beiden zentralen Zahnrädern Hohlrad und Sonnenritzel stellen. Dies kann innerhalb der Zahneingriffe zu einer ungleichmäßigen Breitenlastverteilung führen.

Bei der Verwendung eines einwangigen Planetenträgers können Probleme, welche bei einem zweiwangigen Planetenträger auftreten können, vermieden und/oder gelöst werden. Bei einem einwangigen Planetenträger ist die Planetenradachse nur einseitig mit dem Planetenradträger verbunden. Es ergibt sich ein freies Ende der Achse gegenüber der Einspannung. Die gesamte Baugruppe kann mittels axialer Steckmontage montiert werden. So braucht der Formschluss der Kegelgleitlager kein Problem mehr darstellen.

In einer Ausgestaltung des Planetengetriebes weist dieses eine erste Stirnseite und eine zweite Stirnseite auf, wobei der einwangige Planetenträger im Bereich nur einer Stirnseite, insbesondere der ersten Stirnseite, ist, wobei der zumindest eine ringförmige Lagerkörper, der von der Planetenradachse durchsetzt und an dieser drehfest gehalten ist, auf der zweiten Stirnseite mechanisch von einem weiteren Planetenrad entkoppelt ist. Die Entkopplung ergibt sich insbesondere dadurch, dass es keine zweite Wange gibt, welche als spiegelbildliche Wange dem Tragen einer Vielzahl von Planetenrädern dient.

Hieraus ergibt sich eine Kombination von Kegelgleitlagern in Verbindung mit dem einwangigen Planetenradträger für z.B. Planentenstufen, Industrie- und/oder Windgetrieben. Hieraus ergibt sich die Möglichkeit einer Steckmontage von Baugruppe des Planetengetriebes. Auch ist eine robuste Verdrehsicherung von Bauteilen auf der Achse möglich. Weiterhin ergeben sich zumindest verringerte Einschränkungen bezüglich eines maximalen Achsdurchmessers der Achse. Weiterhin kann sich folgendes ergeben: keine Einschränkung der Trägerlagerung auf den Achssitz im Träger und/der eine verbesserte Zugänglichkeit für eine Spieleinstellung des Lagers.

Weist beim Planetengetriebe jedes Planetenradlager zwei ringförmige Lagerkörper auf, die von einer Planetenradachse durchsetzt und an dieser drehfest gehalten sind und an deren äußeren Umfangsflächen kegelmantelförmige Gleitflächen ausgebildet sind, so können diese derart ausgebildet sein, dass es möglich ist das Lagerspiel der eingesetzten Gleitlager leicht einzustellen und einen einfachen Aufbau zu erzielen. Dem liegt die Überlegung zugrunde, axial geteilte Doppelkegel-Gleitlager einzusetzen, die in der Lage sind, sowohl axiale als auch radiale Kräfte abzuleiten. Durch die entgegengesetzte Anordnung der beiden kegelförmigen Gleitflächen kann ein Planetenrad sowohl in axialer als auch in radialer Richtung festgelegt werden. Dabei kann durch axiale Verstellung der kegelförmigen Lagerkörper relativ zu dem Planetenrad, das korrespondierende kegelförmige Laufflächen besitzt, das radiale Lagerspiel in einfacher Weise eingestellt werden. Die Drehfestigkeit der Lagerkörper kann beispielsweise dadurch bewirkt werden, dass mit Übermaß hergestellte Lagerkörper nach ihrer Positionierung auf die Planetenradachse geschrumpft werden.

In einer Ausgestaltung des Planetengetriebes ist eine Arretierung zumindest eines Lagerkörpers auf der Planetenradachse vorgesehen, um den zumindest einen Lagerkörper zu arretieren. Durch die Arretierung ist der zumindest eine Lagerkörper auf der Planetenradachse axial fixiert.

In einer Ausgestaltung des Planetengetriebes arretiert ein Arretierring zumindest einen Lagerkörper auf der Planetenradachse.

In einer Ausgestaltung des Planetengetriebes ist die Planetenradachse ein Flex-Pin mit einem Hohlzylinder. Der Hohlzylinder trägt zumindest einen der Lagerkörper.

In einer Ausgestaltung des Planetengetriebes weist der Flex-Pin eine Schmierstoffleitung auf. Die Schmierstoffleitung ist insbesondere auch durch den Hohlzylinder geführt, damit Schmierstoff in das Gleitlager und zwischen die Gleit-/Laufflächen gelangen kann.

In einer Ausgestaltung des Planetengetriebes ist zwischen den Gleitflächen des Planetenradlagers und den korrespondierenden Laufflächen des gelagerten Planetenrads ein Schmierspalt, wobei ein Erster dieser Schmierspalte zum Zweiten dieser Schmierspalte unterschiedlich ist.

In einer Ausgestaltung des Planetengetriebes weist ein erster Schmierspalt und ein zweiter Schmierspalt eine unterschiedliche axiale Länge auf. Damit kann beispielsweise auf die Lastverteilung Einfluss genommen werden.

In einer Ausgestaltung des Planetengetriebes weist zumindest einer der Schmierspalte axial unterschiedliche Höhen auf. Damit kann beispielweise der Transport des Schmiermittels beeinflusst werden.

In einer Ausgestaltung des Planetengetriebes weist der erste Schmierspalt eine zur Rotationsachse des Planetenrades unterschiedliche Schrägung auf, als der zweite Schmierspalt. Dadurch kann die Kräfteverteilung im Lager beeinflusst werden.

Bei einer weiteren Ausgestaltung ist wenigstens ein Lagerkörper in axialer Richtung verstellbar, um zwischen den Gleitflächen des Planetenradlagers und den korrespondierenden Laufflächen des gelagerten Planetenrads einen Schmierspalt definierter Höhe einzustellen. Eine optimale Höhe des Schmierspalts zwischen den Gleitflächen des Planetenradlagers und den korrespondierenden Laufflächen des gelagerten Planetenrads ist eine wesentliche Voraussetzung für einen zuverlässigen Betrieb des Planetengetriebes.

In einer Ausgestaltung ist ein Lagerkörper verstellbar, während der andere Lagerkörper eine axialfeste Position aufweist. Der Lagerkörper mit axialfester Position kann als Referenz für das Verstellen des verstellbaren Lagerkörpers dienen, was einer einfachen und präzisen Einstellung der optimalen Höhe des Schmierspalts des Planetenradlagers zuträglich ist.

In einer Ausgestaltung des Planetengetriebes kann die axiale Position des axialfesten Lagerkörpers durch einen Axialanschlag definiert sein. Als Axialanschlag kann insbesondere eine Wange des Planetenträgers oder eine an der Planetenradachse ausgebildete radiale Ringschulter dienen.

In einer Ausgestaltung sind dem verstellbaren Lagerkörper zum axialen Verstellen Justiermittel zugeordnet. Derartige Justiermittel erleichtern das Einstellen und insbesondere auch das bequeme Nachstellen eines erfindungsgemäßen Planetengetriebes im Rahmen einer Wartung, wenn sich die Höhe des Schmierspalts des Gleitlagers durch Verschleiß verändert hat.

In einer Ausgestaltung des Planetengetriebes sind Distanzelemente als Justiermittel vorgesehen, die zwischen einem Lagerkörper und der benachbarten Wange des Planetenträgers und/oder zwischen den Lagerkörpern angeordnet sind. Durch die Wahl einer geeigneten Anzahl von Distanzelementen und deren Anordnung an den angegebenen axialen Positionen innerhalb des Gleitlagers lässt sich eine Höhe des Schmierspalts des Gleitlagers einstellen, wobei Fertigungsungenauigkeiten der Lagerkomponenten ausgeglichen werden können.

In einer Ausgestaltung des Planetengetriebes ist der verstellbare Lagerkörper auf die Planetenradachse aufgeschraubt. Dazu sind an dem verstellbaren Lagerkörper ein Innengewinde und an der Planetenradachse ein korrespondierendes Außengewinde ausgebildet. Mit einer derartigen Schraubverbindung lässt sich die axiale Position des verstellbaren Lagerkörpers durch Drehen um die Planentenradachse stufenlos einstellen.

Alternativ kann der verstellbare Lagerkörper in eine benachbarte Wange des Planetenträgers eingeschraubt sein. Dazu sind an dem verstellbaren Lagerkörper ein Außengewinde und in einer benachbarten Wange des Planetenträgers ein korrespondierendes Innengewinde ausgebildet. Mit einer derartigen Schraubverbindung lässt sich die axiale Position des verstellbaren Lagerkörpers durch Verschrauben in einer benachbarten Wange eines Planetenträgers stufenlos einstellen.

Dabei kann eine Verdrehsicherung vorgesehen sein, mittels welches der auf dem Planetenträger oder in die Wange eingeschraubte Lagerkörper festlegbar ist. Eine Verdrehsicherung erlaubt die sichere Fixierung der eingestellten axialen Position des verstellbaren Lagerkörpers. Ringe auf der Achse, dessen Außendurchmesser größer sind als die Bohrungen im Planetenträger, können beim beschriebenen Lager verwendet werden, die Achse nicht gestuft ausgeführt werden muss.

In einer Ausgestaltung des Planetengetriebes ist auch eine Kombination mehrerer unterschiedlicher Justiermittel zum Einstellen der optimalen Höhe des Schmierspalts des Planetenradlagers möglich.

In einer Ausgestaltung des Planetengetriebes ist in jeder Gleitfläche wenigstens eine Schmiertasche ausgebildet ist, in die ein Schmierstoffkanal mündet, der den Lagerkörper radial durchsetzt, wobei der Schmierstoffkanal mit einem exzentrischen Schmierstoffzuführkanal verbunden ist, der in der Planetenradachse ausgebildet ist und diese axial durchsetzt. Während des normalen Betriebs des Planetengetriebes wird den Gleitflächen des Planetenradlagers im Rahmen einer Druckschmierung Schmierstoff zugeführt. Der Schmierstoff wird unter Druck in den exzentrischen Schmierstoffzuführkanal eingeleitet und strömt von dort durch Schmierstoffkanäle in die Schmiertaschen, von wo er sich auf den Gleitflächen verteilt.

In einer weiteren Ausgestaltung ist zwischen den Lagerkörpern ein Distanzring angeordnet, der die Planetenradachse umgreift und einen minimalen axialen Abstand zwischen den Lagerkörpern definiert. Durch einen solchen Distanzring kann verhindert werden, dass der axiale Abstand und damit die Höhe des Schmierspalts zu gering eingestellt werden, was einem möglichst verschleißarmen Lauf des Planetenrads entgegensteht.

In einer Ausgestaltung des Planetengetriebes kann an einer inneren Umfangsfläche des Distanzrings eine ringförmige Schmierstoffsammel-Nut ausgebildet sein. Diese Schmierstoffsammel-Nut kann zum Verteilen von Schmierstoff zwischen den Lagerkörpern verwendet werden.

In einer Ausgestaltung des Planetengetriebes ist in dem Distanzring eine Mehrzahl von Schmierstoffkanälen ausgebildet, die in die Schmierstoffsammel-Nut münden. Durch diese Schmierstoffkanäle kann Schmierstoff aus der Schmierstoffsammel-Nut in Richtung des Schmierspalts fließen.

In einer Ausgestaltung des Planetengetriebes ist in der Planetenradachse ein Schmierstoffzuführkanal ausgebildet, der radial in die Schmierstoffsammel-Nut des Distanzrings mündet. Durch einen solchen Schmierstoffzuführkanal lässt sich der in dem Distanzring vorgesehenen Schmierstoffsammel-Nut in Form einer Trudelschmierung Schmierstoff zuführen. Die Trudelschmierung ermöglicht es, das Planetengetriebe in einem Notbetrieb weiter zu betreiben, wenn die Druckschmierung ausfällt.

Weitere Merkmale und Vorteile der vorliegenden Erfindung werden beispielhaft anhand der nachfolgenden Beschreibung verschiedener Ausführungsbeispiele des erfindungsgemäßen Planetengetriebes unter Bezugnahme auf die beiliegende Zeichnung deutlich. Darin sind
- FIG 1: eine schematische axiale Querschnittansicht eines Planetengetriebes gemäß einer ersten Ausführungsform;
- FIG 2: eine axiale Draufsicht eines Planetenträgers des in FIG 1 dargestellten Planetengetriebes entlang der Linie II-II;
- FIG 3: eine axiale Querschnittansicht eines Planetenradlagers des in FIG 1 dargestellten Planetengetriebes;
- FIG 4: eine perspektivische Seitenansicht eines Lagerkörpers des in FIG 1 dargestellten Planetengetriebes;
- FIG 5: einen Ausschnitt einer Querschnittansicht eines Planetenradlagers;
- FIG 6: einen Ausschnitt einer Querschnittansicht eines Planetenradlagers mit einem hybriden Lagerkörper;
- FIG 7: eine axiale Querschnittansicht eines Planetenradlagers eines Planetengetriebes gemäß einer zweiten Ausführungsform der vorliegenden Erfindung;
- FIG 8: eine axiale Querschnittansicht eines Planetenradlagers eines Planetengetriebes gemäß einer dritten Ausführungsform der vorliegenden Erfindung;
- FIG 9: eine axiale Querschnittansicht eines Planetenradlagers eines Planetengetriebes gemäß einer vierten Ausführungsform der vorliegenden Erfindung; und
- FIG 10: einen Ausschnitt einer Querschnittansicht eines Planetenradlagers mit einem Flex-Pin;
- FIG 11: einen Ausschnitt einer Querschnittansicht eines Planetenradlagers mit einem verkürzten Flex-Pin;
- FIG 12: einen Flex-Pin mit einer Schmierstoffleitung
- FIG 13: einen Ausschnitt einer Querschnittansicht eines Planetenradlagers mit asymmetrischen Lagerkörpern; und
- FIG 14: einen Ausschnitt einer Querschnittansicht eines Planetenradlagers mit einem Schmierspalt unterschiedlicher Höhe.

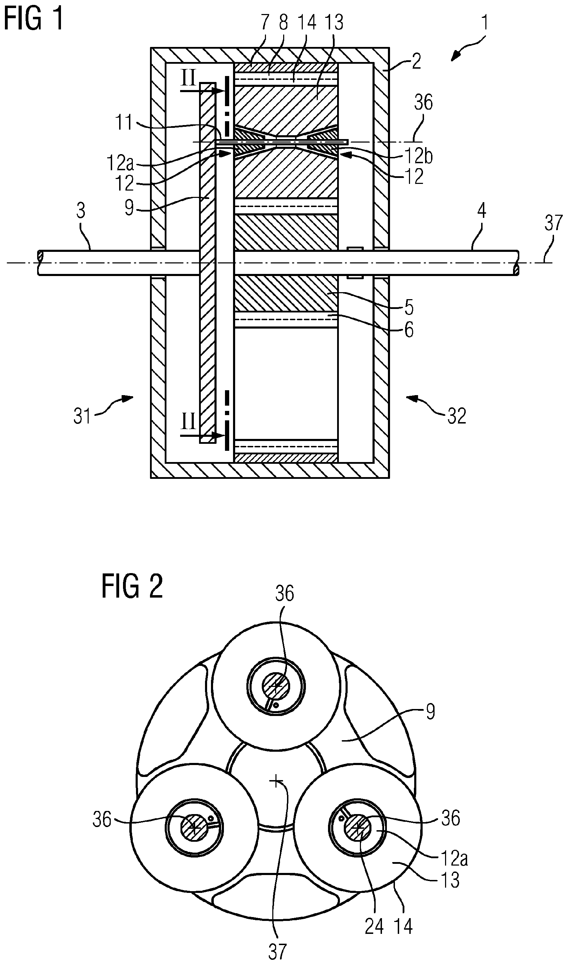

Die Figuren 1 bis 4 zeigen ein Planetengetriebe 1 gemäß einer ersten Ausführungsform der vorliegenden Erfindung. Das Planetengetriebe 1 weist ein Getriebegehäuse 2, das auf gegenüberliegenden Stirnseiten jeweils von einer Antriebswelle 3 und einer Abtriebswelle 4 durchsetzt ist, auf. In dem Getriebegehäuse 2 ist ein zentrales Sonnenrad 5 mit einer Außenverzahnung 6 an der Abtriebswelle 4 um eine zentrale Getriebedrehachse 37 rotierbar gehalten. In axialer Richtung korrespondierend zum Sonnenrad 5 ist in dem Getriebegehäuse 2 ein zu der zentralen Getriebedrehachse 37 konzentrisches Hohlrad 7 mit einer Innenverzahnung 8 angeordnet, das fest mit dem Getriebegehäuse 2 verbunden ist und das Sonnenrad 5 umgibt. An der Antriebswelle 3 ist in dem Getriebegehäuse 2 ein Planetenträger 9 um die zentrale Getriebedrehachse 37 drehbar gehalten. Der Planetenträger 9 weist eine Wange 9 auf einer ersten Stirnseite des Planetengetriebes 1 bzw. der Planetenräder 13 auf. Auf einer zweiten Stirnseite 32 des Planetengetriebes 1 bzw. der Planetenräder 13 befindet sich keine weitere Wange. Die Wange 9 trägt die Planetenräder. Der Planetenträger 9 ist derart ausgeführt, dass dieser nur eine Wange 9 auf der Seite der Antriebswelle 3 aufweist. Es gibt auch Planetengetriebe, bei welchen der Planetenträger zwei Wangen aufweist, wobei eine Wange im Bereich der ersten Stirnseite ist und die zweite Wange im Bereich der zweiten Stirnseite. Die beiden Wangen sind dann über Planetenradachsen miteinander verbunden. Zwischen diesen beiden Wangen des Planetenträgers sind die Planetenräder angeordnet. Dies ist in der FIG 1 jedoch nicht dargestellt. Die Einstellung des Lagerspiels der Kegelgleitlager für den zweiwangigen Planetenträger ist aufwendig, gleichzeitig müssen die Bauteile des Gleitlagers auf der Achse gegen Verdrehen gesichert werden. Dies wird durch den zweiwangigen Planetenträger und den Formschluss der Kegelgleitlager erschwert, da die Achse als letztes Bauteil in die Baugruppe des Trägers axial eingeführt wird. Demnach kann so keine radiale Verdrehsicherung der Bauteile auf der Achse realisiert werden. Das Planetengetriebe 1 nach FIG 1 weist nur eine Wange auf.

In der FIG 1 ist zur Verbesserung der Übersichtlichkeit lediglich eine Planetenradachse 36 dargestellt. Der Planetenträger 9 kann auch eine von drei abweichende Zahl von Planetenradachsen tragen. An jeder Planetenradachse 11 ist ein als Gleitlager ausgebildetes Planetenradlager 12 vorgesehen, in dem ein Planetenrad 13 um eine Planetenraddrehachse 36 drehbar gelagert ist. Die Planetenräder 13 weisen Außenverzahnungen 14 auf, die mit der Innenverzahnung 8 des Hohlrads 7 und der Außenverzahnung 6 des Sonnenrads 5 in Eingriff stehen. Das Planetenradlager 12 weist einen ersten Lagerkörper 12a auf und einen zweiten Lagerkörper 12b.

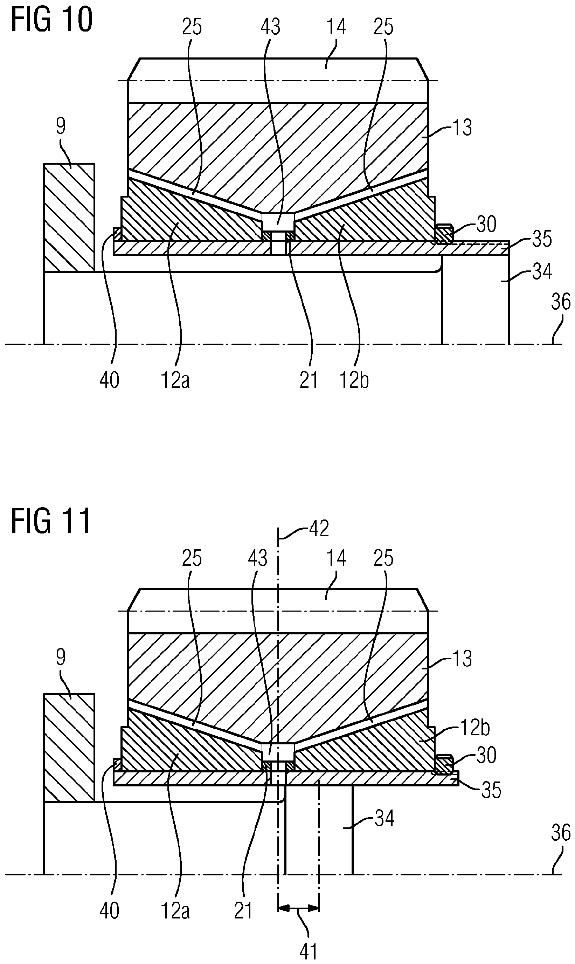

Bei dem einwangigen Planetenträger 9 ist die Planetenraddrehachse 36 nur einseitig mit dem Planetenträger 9 verbunden. So ergibt sich ein freies Ende der Planetenraddrehachse 36 gegenüber der Einspannung. Diese Baugruppe kann nun mittels axialer Steckmontage montiert werden. So kann auch ein Formschluss der Kegelgleitlager kein Problem bereiten. Der Gleitlagerkörper 12a (kann auch als Gleitlagerring bezeichnet werden), kann auf der Achse radial gegen Verdrehen gesichert werden. Danach wird das Planentenrad axial über das freie Ende der Planetenraddrehachse 36 montiert, bevor der weitere Lagerkörper 12b axial aufgesteckt wird. Am freien Ende der Planetenraddrehachse 36 ist eine gute Zugänglichkeit für eine axiale Verdrehsicherung des Lagerkörpers 12b, sowie ausreichend Freiraum für eine Messung und Einstellung des Lagerspiels gegeben. Diese Lösung lässt sich mit auch mit einem Flex-Pin erzielen, wobei ein Flex-Pin in FIG 1 nicht dargestellt ist. Ein Flex-Pin 34 ist in den Figuren 10 bis 12 dargestellt. Auch so ist eine Schiefstellungen des Planentenrades zu verhindern.

Jedes Planetenradlager 12 weist zwei ringförmige Lagerkörper 12a und 12b auf, die von der Planetenradachse 11 durchsetzt und an dieser drehfest gehalten sind. An den äußeren Umfangsflächen der Lagerkörper 12a, 12b sind kegelmantelförmige Gleitflächen 16 ausgebildet, die mit der zentralen Getriebedrehachse 37 jeweils einen spitzen Winkel a, der bevorzugt zwischen 5° und 40° beträgt, aufspannen. In axialen Randbereichen der Gleitflächen 16 können Abschrägungen oder dergleichen vorgesehen sein, um einer verschleißbedingten Kantenbildung entgegenzuwirken.

Jeder Lagerkörper 12a, 12b ist von einem Schmierstoffkanal 17 radial durchsetzt. Der Schmierstoffkanal 17 ist mit einem exzentrischen Schmierstoffzuführkanal 18 verbunden, der die Planetenradachse 11 axial durchsetzt. Der Schmierstoffkanal 17 mündet in eine Schmiertasche 19, die in einem gering belasteten Bereich der Gleitfläche 16 des Lagerkörpers 12a, 12b als Abflachung oder Ausnehmung ausgebildet ist. Durch den Schmierstoffzuführkanal 18, den Schmierstoffkanal 17 und die Schmiertasche 19 werden die Gleitflächen 16 während des regelmäßigen Betriebs des Planetenradlagers 12 in Form einer Druckschmierung mit Schmierstoff versorgt.

Die verjüngten Enden der Lagerkörper 12a, 12b weisen zueinander, wobei an inneren Umfangsflächen des Planetenrads 13 zu den Gleitflächen 16 des Planetenradlagers 12 korrespondierende Laufflächen 20 ausgebildet sind.

Zwischen den Lagerkörpern 12a, 12b des Planetenradlagers 12 ist ein Distanzring 21 angeordnet, der die Planetenradachse 11 umgreift und einen minimalen Abstand zwischen den Lagerkörpern 12a, 12b definiert. An einer inneren Umfangsfläche des Distanzrings 21 ist eine ringförmige Schmierstoffsammel-Nut 22 ausgebildet, in die eine Mehrzahl den Distanzring durchsetzender Schmierstoffkanäle 23 mündet. Korrespondierend zu der Schmierstoffsammel-Nut 22 des Distanzrings 21 ist in der Planetenradachse 11 ein zentraler Schmierstoffzuführkanal 24 ausgebildet, der in die Schmierstoffsammel-Nut 22 des Distanzrings 21 mündet. Durch den zentralen Schmierstoffzuführkanal 24, die Schmierstoffsammel-Nut 22 und die Mehrzahl von Schmierstoffkanälen 23 kann eine Trudelschmierung des Planetenradlagers 12 erfolgen, die für einen Notbetrieb des Planetengetriebes ausreicht.

Die axialen Breiten b₁ und b₂ der Lagerkörper 12a und 12b und die Breite b₃ des Distanzrings 21 erfüllen die Beziehung b₁ + b₂ + b₃ = B, wobei B die gewünschte Breite des Planetenradlagers 12 bezeichnet. Auf diese Weise sind die Lagerkörper 12a und 12b und der Distanzring 21 axial festgelegt. Die axiale Festlegung ergibt sich auch durch den Arretierring 30, durch welchen die Breite B vorgegeben ist.

Nach der Herstellung des Gleitlagers erfüllen die Lagerkörper 12a und 12b und der Distanzring 21 zunächst die Beziehung b₁ + b₂ + b₃ > B. Bei der Montage des Planetenradlagers 12 werden die Breiten der beiden Lagerkörper 12a und 12b und/oder der Distanzring 21 durch spanende Nachbearbeitung derart angepasst, dass sowohl die Beziehung b₁ + b₂ + b₃ = B erfüllt als auch durch geeignete Wahl der Breiten b₁, b₂ und b₃ eine geforderte Höhe S des Schmierspalts 25 eingestellt ist. Dabei gibt es zwischen einer Höhenänderung ΔS des Schmierspalts 25 und einer durch Breitenänderung Δb bewirkten axialen Verstellung des jeweiligen Lagerkörpers 12a bzw. 12b die Beziehung ΔS = Δb * sin(α).

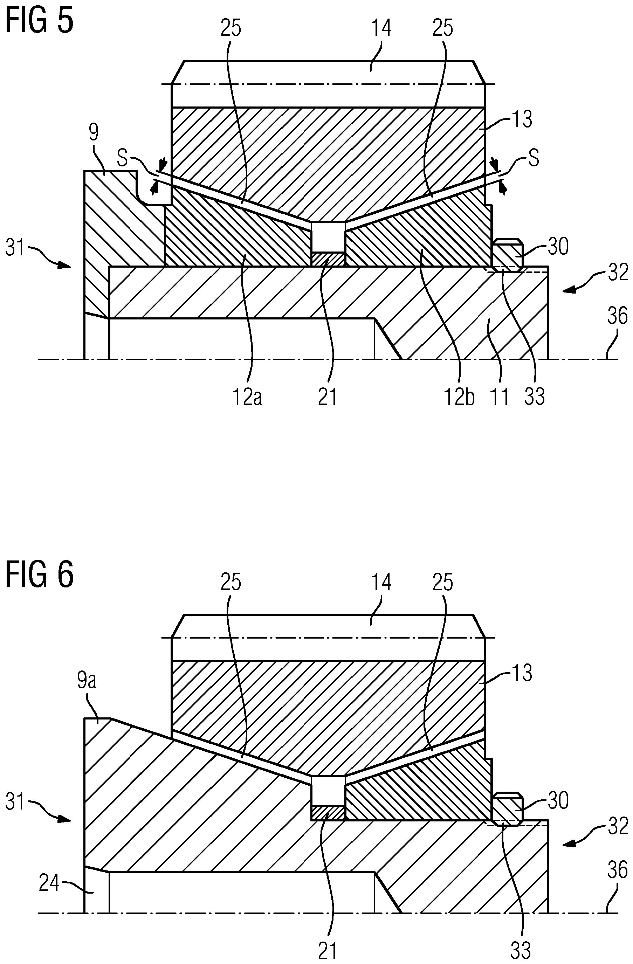

Die Darstellung nach FIG 5 zeigt einen Ausschnitt einer Querschnittansicht eines Planetenradlagers, bei welchem der Arretierring 30 mittels eines Gewindes 33 auf die Planetenradachse 11 geschraubt ist. Mittels des Arretierrings 30 werden die Lagerkörper 12a und 12b mit dem dazwischen liegenden Distanzring 21 auf den Planetenträger 9 gedrückt. Es liegt folglich eine angestellte Gleitlagerung in X-Anordnung für die Planetenradlagerung mit einwangigem Planetenträger 9 vor.

Die Darstellung nach FIG 6 zeigt einen Ausschnitt einer Querschnittansicht eines Planetenradlagers mit einem hybriden Lagerkörper 9a. Vergleicht man den hybriden Lagerkörper 9a aus FIG 6 beispielsweise mit Elementen aus FIG 5, so wird deutlich, dass der hybride Lagerkörper 9a die Funktionen der Elemente Planetenträger 9, Lagerkörper 12a und Planetenradachse 11 nach FIG 5 in einem Bauteil 9a integriert. Dies reduziert die Komplexität und kann die Steifigkeit des Getriebes erhöhen.

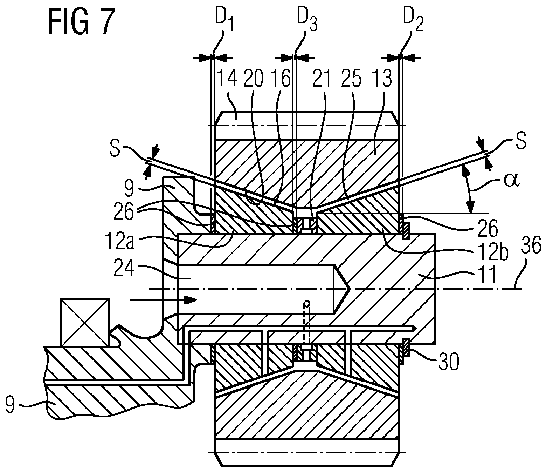

Die Darstellung nach FIG 7 zeigt ein Planetenradlager 12 eines Planetengetriebes 1 gemäß einer weiteren Ausführungsform des Planetengetriebes. Zwischen dem Lagerkörper 12a und dem Distanzring 21 sowie zwischen den Lagerkörpern 12a, 12b und jeweils benachbarten Elementen, wie Planetenträger 9 bzw. Arretierring 30, sind Distanzelemente 26 eingefügt. Die axialen Breiten b₁, b₂ und b₃ der Lagerkörper 12a, 12b und des Distanzrings 21 einerseits sowie D₁, D₂ und D₃ der Distanzelemente 26 andererseits erfüllen die Beziehung b₁ + b₂ + b₃ + D₁ + D₂ + D₃ = B, so dass die Lagerkörper 12a, 12b, der Distanzring 26 und die Distanzelemente 26 axial in ihrer Position festgelegt sind.

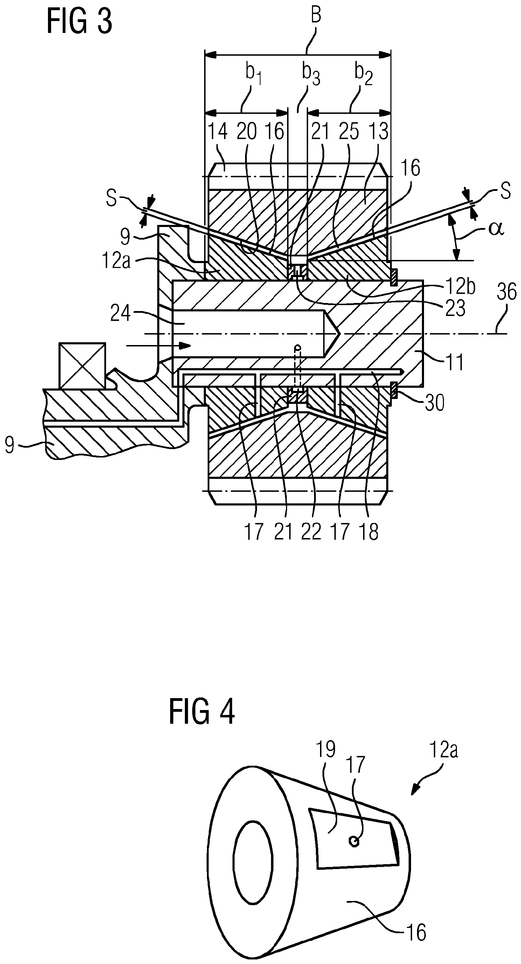

Nach der Herstellung erfüllen die Lagerkörper 12a, 12b und der Distanzring 21 zunächst die Beziehung b₁ + b₂ + b₃ < B. um die gewünschte Höhe S des Schmierspalts 25 einzustellen. Dabei sind b₁, b₂, b₃ und B wie in der in FIG 3 dargestellten Ausführungsform definiert und D₁, D₂ und D₃ bezeichnen die axialen Breiten der Distanzelemente 26.

Zunächst erfüllen die axialen Breiten der Lagerkörper 12a, 12b und des Distanzrings 21 die Beziehung b₁ + b₂ + b₃ < B. Bei der Montage werden an den genannten Stellen Distanzelemente 26 geeigneter Dicken D₁, D₂ und D₃ derart eingefügt, dass die summierte axiale Dicke D₁ + D₂ + D₃ aller eingefügten Distanzelemente 26 gleich der Differenz zwischen der Lagerbreite B und der summierten axialen Breite b₁ + b₂ + b₃ der Lagerkörper 12a, 12b und des Distanzrings 21 ist und der Schmierspalt S die geforderte Höhe S besitzt.

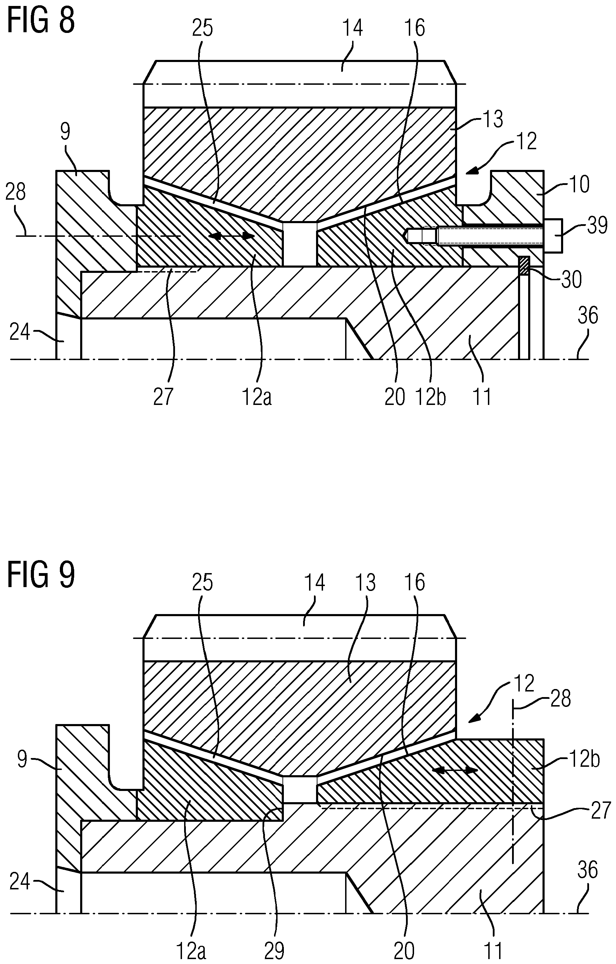

Die Darstellung nach FIG 8 zeigt in einem Ausschnitt ein Planetenradlager 12 eines Planetengetriebes 1 gemäß einer weiteren Ausführungsform. Der verstellbare Lagerkörper 12a ist auf die Planetenradachse 11 aufgeschraubt. Dazu sind an dem verstellbaren Lagerkörper 12a ein Innengewinde und an der Planetenradachse 11 ein korrespondierendes Außengewinde ausgebildet. Diese Schraubverbindung 27 erlaubt ein stufenloses Verstellen der axialen Position des verstellbaren Lagerkörpers 12a auf der Planetenradachse 11. Der axialfeste Lagerkörper 12b ist mit einem Lagerkörperhalter 10 mit einer Schraube 39 verschraubt. Der Lagerkörperhalter ist über den Arretierring 30, welcher in die Planetenradachse 11 und in den Lagerkörperhalter 10 ragt, axial fixiert. Wenn die geforderte Höhe S des Schmierspalts 25 erreicht ist, wird der Lagerkörper 12a durch eine Verdrehsicherung 28 in der entsprechenden axialen Position festgelegt. Als Verdrehsicherung 28 können Stifte, Bolzen oder dergleichen verwendet werden. Wenn sich die Höhe S des Schmierspalts 25 im Laufe der Zeit aufgrund eines betriebsbedingten Verschleißes ändert, lässt sich der verstellbare Lagerkörper 12a entsprechend nachjustieren, um die geforderte Höhe S des Schmierspalts 25 wiederherzustellen.

Die Darstellung nach FIG 9 zeigt ein Planetenradlager 12 eines Planetengetriebes 1 gemäß einer weiteren Ausführungsform. Der verstellbare Lagerkörper 12b ist mittels eines Gewindes 27 auf die Planetenradachse 11 geschraubt und mittels einer Verdrehsicherung 28 gesichert. Die Schraubverbindung 27 ermöglicht es den Lagerkörper 12b in axialer Richtung zu positionieren. Als Verdrehsicherung 28 können auch hier Stifte, Bolzen oder dergleichen verwendet werden. Die axiale Position des axialfesten Lagerkörpers 12a ist durch eine an der Planetenradachse 11 ausgebildete, als Axialanschlag dienende radiale Ringschulter 29 festgelegt. Durch Ein- bzw. Ausschrauben des verstellbaren Lagerkörpers 12b lässt sich die geforderte Höhe S des Schmierspalts 25 einstellen. Wenn sich die Höhe S des Schmierspalts 25 des Planetenradlagers 12 in Folge betriebsbedingten Verschleißes verschoben hat, lässt sich das Planetenradlager 12 durch axiales Verstellen des Lagerkörpers 12b entsprechend nachjustieren.

Für eine größere Flexibilität beim Justieren von Planetenradlagern lassen sich die vorgeschlagenen Verfahrensweisen und Ausführungen zum Einstellen einer optimalen Höhe des Schmierspalts 25 des Planetenradlagers 12 auch miteinander kombinieren.

Während des Betriebs des Planetengetriebes 1 wird der Planetenträger 9 durch die Antriebswelle 3 in Rotation versetzt. Wegen des Eingriffs ihrer Außenverzahnung 14 in die Innenverzahnung 8 des Hohlrads 7 rollen die Planetenräder 13 entlang der Innenseite des Hohlrads 7 ab. Durch die Rotation der Planentenräder 13 wird wegen des Eingriffs ihrer Außenverzahnung 14 in die Außenverzahnung 6 des Sonnenrads 5 wiederum das Sonnenrad 5 und mit ihm die Abtriebswelle 4 in Rotation versetzt. Dabei dreht sich die Abtriebswelle 4 mit höherer Drehzahl als die Antriebswelle 3, weil die Planetenräder 13 einen geringeren Umfang haben als der Kreis, den die Planetenraddrehachsen 36 bei Ihrer Rotation um die zentrale Getriebedrehachse 37 des Planetengetriebes 1 beschreiben.

Während des Betriebs des Gleitlagers, wird diesem kontinuierlich Schmierstoff durch den zentralen Schmierstoffzuführkanal 24 zugeführt. Der Schmierstoff verteilt sich zunächst in der Schmierstoffsammel-Nut 22 des Distanzrings 21 und fließt dann durch den wenigstens einen Schmierstoffkanal 23 in Richtung des Schmierspalts 25 (siehe FIG 3).

Ein Vorteil des beschriebenen Planetengetriebes 1 liegt darin, dass im Unterschied zu zylindrischen Gleitlagern keine zusätzlichen Axialgleitlager vorgesehen werden müssen, um das Planetenrad 13 in axialer Richtung festzulegen. Dies macht entsprechend die ausbildende Bearbeitung zusätzlicher axialer Gleitflächen überflüssig. Ein weiterer Vorteil des beschriebenen Gleitlagers liegt in der einfachen Ein- bzw. Nachstellbarkeit der Höhe S des Schmierspalts 25, was eine größere Bauteiltoleranz bei der Herstellung der für das Planetenradlager benötigten Bauteile erlaubt. Insgesamt lassen sich also bei der Verwendung eines derartigen Planetengetriebes Kostenvorteile aus geringeren Herstellungskosten und einer aufgrund der Nachstellmöglichkeiten erhöhten Lebensdauer der Planetenradlager 12 erzielen.

Die Darstellung nach FIG 10 zeigt einen Ausschnitt einer Querschnittansicht eines Planetenradlagers mit einem Flex-Pin 34, eine kegelige Gleitlagerung mit klassischem Flex-Pin. Der Flex-Pin 37 trägt einen Hohlzylinder 35. Der Hohlzylinder 35 trägt die Lagerkörper 12a und 12b, sowie den Distanzring 21. Über dem Distanzring 21 ist ein Nutkanal 43 ausgebildet. Der Lagerkörper 12a ist axial durch einen Anschlag 40 positioniert. Der Arretierring 30 klemmt die Lagerkörper 12a und 12b, sowie den Distanzring 21 ein.

Die Darstellung nach FIG 11 zeigt einen Ausschnitt einer Querschnittansicht eines Planetenradlagers mit einem verkürzten Flex-Pin 34. Der Flex-Pin 34 endet im Vergleich zum Flex-Pin 34 nach FIG 10 in einem axial mittigen Bereich des Hohlzylinders 35. Der Flex-Pin 34 ist zur Mitte 42 des Planetenrades 13 um den Versatz 41 versetzt. So kann eine symmetrischere Kraftverteilung erreicht werden. Durch die geringere Masse des Flex-Pin 34 nach FIG 11 ist auch die Trägheit reduziert.

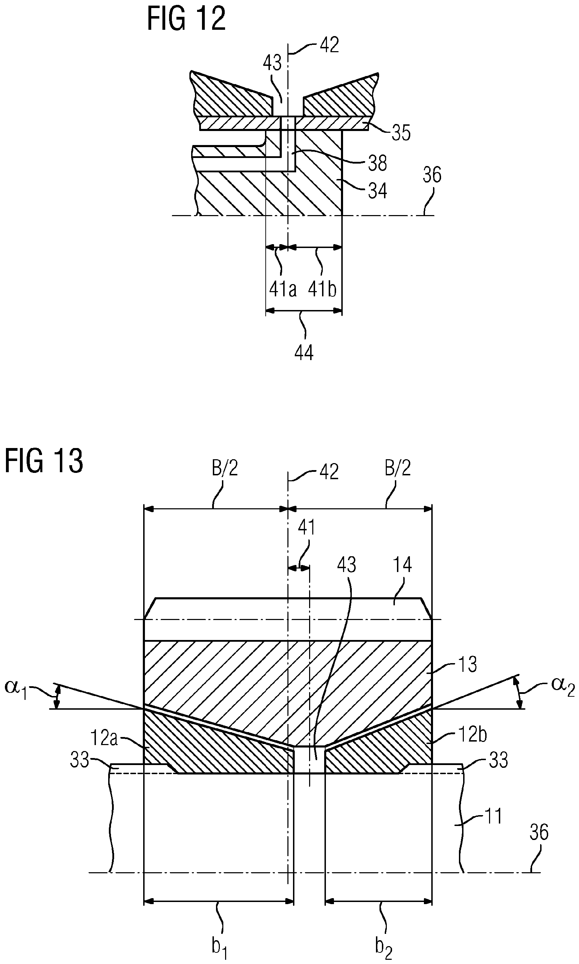

Die Darstellung nach FIG 12 zeigt einen Flex-Pin 34 als Achse für das Planetenrad mit einer integrierten Schmierstoffleitung 38. Die Schmierstoffleitung 38 (z.B. für die Versorgung mit einem Öl) durchdringt auch den Hohlzylinder 35 und mündet im Nutkanal 43. Die Schmierstoffleitung 38 ist zum Endstück 44 des Flex-Pin 34 versetzt. Es ergibt sich ein Versatz 41a und 41b zur Mitte 42 des Planetenrades. Der Versatz 41a und 41b sind unterschiedlich. Das Endstück 44 überdeckt den Nutkanal 42 vollständig.

Durch die Verwendung eines Flex-Pin kann der Einfluss einer Achsverformung und/oder Torsion des Planetenträgers auf eine Schiefstellung der Verzahnung reduziert und/oder vermieden werden. Das kardanische Gelenk mit dem Hohlzylinder (Hülse) kann über den Versatz 41 (siehe FIG 11) des Anschlusses von der Achse (Flex-Pin) zum Hohlzylinder (Flex-Pinhülse) angepasst und eingestellt werden, je nach Verformungsgrad.

Die Darstellung nach FIG 13 zeigt einen Ausschnitt einer Querschnittansicht eines Planetenradlagers mit asymmetrischen Lagerkörpern 12a und 12b. Der Lagerkörper 12a weist mit seiner Achslänge b₁ eine zum Lagerkörper 12b (mit der Achslänge b2) unterschiedliche Achslänge auf. Der Nutkanal 43 ist zur Mitte 42 des Planetenrades um den Versatz 41 versetzt. Der erste Schmierspalt 25a weist zur Planetenradachse 36 einen ersten Winkel α1 auf. Der zweite Schmierspalt 25b weist zur Planetenradachse 36 einen zweiten Winkel α2 auf. Der Kegelwinkel α 1 und α 2 kann für beide Kegelgleitlager unterschiedliche sein. Das linke Gleitlager mit dem Lagerkörper 12a ist größer ausgeführt als das rechte Gleitlager mit dem Lagerkörper 12b. Dies kann ebenfalls als Einstellmöglichkeit dienen, um asymmetrische Verformungen infolge von ungleichmäßiger Belastung auszugleichen.

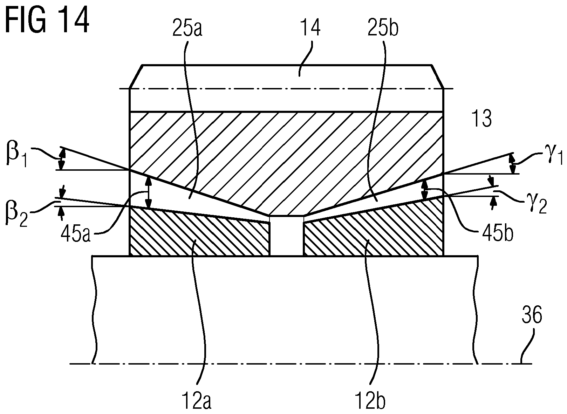

Die Darstellung nach FIG 14 zeigt einen Ausschnitt einer Querschnittansicht eines Planetenradlagers mit einem Schmierspalt unterschiedlicher Höhe 45a und 45b. Der erste Schmierspalt 25a weist eine von innen nach außen zunehmende Höhe 45a auf. Der zweite Schmierspalt 25b weist auch eine von innen nach außen zunehmende Höhe 45b auf. Die minimalen Höhen der Schmierspalte 25a und 25b sind gleich. Die maximalen Höhen der Schmierspalte 25a und 25b sind unterschiedlich. Hieraus ergibt sich eine asymmetrische Kegelgleitlagerung mit Winkelkorrektur. Die Kegelwinkel der jeweiligen Gleitlagerfunktionsflächen sind unterschiedlich gestaltet. Dies kann als geometrische Korrektur der Gleitlager erfolgen, wenn die Verformungen entsprechend groß sind.

## Patentansprüche

1. Planetengetriebe (1), insbesondere für eine Windkraftanlage, mit einem Getriebegehäuse (2), einem zentralen Sonnenrad (5), das in dem Getriebegehäuse (2) um eine zentrale Getriebedrehachse (37) rotierbar gehalten ist und eine Außenverzahnung (6) trägt, einem Hohlrad (7), das konzentrisch zu der zentralen Getriebedrehachse (37) in dem Getriebegehäuse (2) angeordnet ist und eine Innenverzahnung (8) aufweist, **dadurch gekennzeichnet, dass** das Planetengetriebe einen einwangigen Planetenträger (9) aufweist, der in dem Getriebegehäuse (2) um die zentrale Getriebedrehachse (37) drehbar gelagert ist, und mehrere Planetenräder (13) aufweist, die mittels als Gleitlager ausgestalteter Planetenradlager (12) an dem Planetenträger (9) um Planetenraddrehachsen (36) drehbar gelagert sind und Außenverzahnungen (14) aufweisen, die mit der Innenverzahnung (8) des Hohlrads (7) und der Außenverzahnung (6) des Sonnenrads (5) in Eingriff stehen, wobei jedes Planetenradlager (12) zwei ringförmige Lagerkörper (12a, 12b) aufweist, wobei zumindest einer der ringförmigen Lagerkörper (12b) von einer Planetenradachse (11) durchsetzt und an dieser drehfest gehalten ist, wobei an den äußeren Umfangsflächen der Lagerkörper (12a,12b) kegelmantelförmige Gleitflächen derart ausgebildet sind, dass die verjüngten Enden der Lagerkörper (12a,12b) zueinander weisen, und wobei an inneren Umfangsflächen des Planetenrads (13) zu den Gleitflächen des Planetenradlagers (12) korrespondierende Laufflächen (20a,20b) ausgebildet sind.

2. Planetengetriebe (1) nach Anspruch 1, mit einer ersten Stirnseite (31) und einer zweiten Stirnseite (32), wobei der einwangige Planetenträger (9) im Bereich der ersten Stirnseite (31) ist, wobei der zumindest eine ringförmige Lagerkörper (12b), der von der Planetenradachse (11) durchsetzt und an dieser drehfest gehalten ist, auf der zweiten Stirnseite (32) mechanisch von einem weiteren Planetenrad (13) entkoppelt ist.

3. Planetengetriebe (1) nach Anspruch 1 oder 2, wobei die Lagerkörper (12a, 12b) axial beabstandet angeordnet sind.

4. Planetengetriebe (1) nach einem der vorhergehenden Ansprüche, wobei ein Arretierring (30) zumindest einen Lagerkörper (12a,12b) auf der Planetenradachse (11) arretiert.

5. Planetengetriebe (1) nach einem der vorhergehenden Ansprüche, wobei die Planetenradachse (11) ein Flex-Pin (34) mit einem Hohlzylinder (35) ist.

6. Planetengetriebe (1) nach Anspruch 5, wobei der Flex-Pin (34) eine Schmierstoffleitung (38) aufweist.

7. Planetengetriebe (1) nach einem der vorhergehenden Ansprüche, wobei zwischen den Gleitflächen des Planetenradlagers (12) und den korrespondierenden Laufflächen (20a, 20b) des gelagerten Planetenrads (13) ein Schmierspalt ist, wobei ein Erster dieser Schmierspalte zum Zweiten dieser Schmierspalte unterschiedlich ist.

8. Planetengetriebe (1) nach Anspruch 7, wobei erster Schmierspalt und zweiter Schmierspalt eine unterschiedliche axiale Länge aufweisen.

9. Planetengetriebe (1) nach Anspruch 7 oder 8, wobei zumindest einer der Schmierspalte axial unterschiedliche Höhen hat.

10. Planetengetriebe (1) nach einem der Ansprüche 7 bis 9, wobei der erste Schmierspalt eine zur Rotationsachse (36) des Planetenrades (13) unterschiedliche Schrägung aufweist als der zweite Schmierspalt.

11. Planetengetriebe nach einem der vorhergehenden Ansprüche, wobei wenigstens ein Lagerkörper (12a,12b) in axialer Richtung verstellbar ist, um zwischen den Gleitflächen des Planetenradlagers (12) und den korrespondierenden Laufflächen (20) des gelagerten Planetenrads (13) einen Schmierspalt definierter Höhe (S) einzustellen.

12. Planetengetriebe (1) nach einem der vorhergehenden Ansprüche, wobei genau ein Lagerkörper (12a,12b) verstellbar ist und der andere Lagerkörper (12a,12b) eine axialfeste Position aufweist.

13. Planetengetriebe (1) nach Anspruch 12, wobei die axiale Position des axialfesten Lagerkörpers (12a,12b) durch einen Axialanschlag (40) definiert ist, insbesondere eine an der Planetenradachse (11) ausgebildete radiale Ringschulter (29) des Planetenträgers (9).

14. Planetengetriebe (1) nach einem der Ansprüche 12 bis 13, **dadurch gekennzeichnet , dass** dem verstellbaren Lagerkörper (12a,12b) Justiermittel (26,27,28) zum axialen Verstellen zugeordnet sind.

15. Planetengetriebe (1) nach Anspruch 14, **dadurch gekennzeichnet , dass** Distanzelemente (26) als Justiermittel vorgesehen sind, die zwischen einem Lagerkörper (12a, 12b) und der benachbarten Wange (10) des Planetenträgers (9) und/oder zwischen den Lagerkörpern (12a,12b) angeordnet sind.

16. Planetengetriebe (1) nach einem der Ansprüche 12 bis 15, **dadurch gekennzeichnet , dass** der verstellbare Lagerkörper (12a,12b) auf die Planetenradachse (11) aufgeschraubt ist.

17. Planetengetriebe (1) nach einem der Ansprüche 12 bis 15, **dadurch gekennzeichnet , dass** der verstellbare Lagerkörper (12a,12b) in die benachbarte Wange (10) des Planetenträgers (9) eingeschraubt ist.

18. Planetengetriebe (1) nach einem der Ansprüche 16 oder 17, **dadurch gekennzeichnet , dass** eine Verdrehsicherung (28) vorgesehen ist, mittels derer der verstellbare Lagerkörper (12a, 12b) axial festlegbar ist.

19. Planetengetriebe (1) nach einem der vorhergehenden Ansprüche, **dadurch gekennzeichnet , dass** in jeder Gleitfläche wenigstens eine Schmiertasche (19) ausgebildet ist, in die ein Schmierstoffkanal (17) mündet, der den Lagerkörper (12a,12b) radial durchsetzt, wobei der Schmierstoffkanal (17) mit einem exzentrischen Schmierstoffzuführkanal (18) verbunden ist, der in der Planetenradachse (11) ausgebildet ist und diese axial durchsetzt.

20. Planetengetriebe (1) nach einem der vorhergehenden Ansprüche, **dadurch gekennzeichnet , dass** zwischen den Lagerkörpern (12a,12b) ein Distanzring (21) angeordnet ist, der die Planetenradachse (11) umgreift und einen minimalen axialen Abstand zwischen den Lagerkörpern (12a,12b) definiert.

21. Planetengetriebe (1) nach Anspruch 20, **dadurch gekennzeichnet , dass** an einer inneren Umfangsfläche des Distanzrings (21) eine ringförmige Schmierstoffsammel-Nut (22) ausgebildet ist.

22. Planetengetriebe (1) nach Anspruch 21, **dadurch gekennzeichnet , dass** in dem Distanzring (21) eine Mehrzahl von Schmierstoffkanälen (23) ausgebildet ist, die in die Schmierstoffsammel-Nut (22) münden.

23. Planetengetriebe (1) nach Anspruch 22, **dadurch gekennzeichnet , dass** in der Planetenradachse (11) ein zentraler Schmierstoffzuführkanal (24) ausgebildet ist, der in die Schmierstoffsammel-Nut (22) des Distanzrings (21) mündet.

## Claims

1. Planetary gear unit (1), in particular for a wind turbine, having a gear unit housing (2), a central sun gear (5), which is held in the gear unit housing (2) so as to be rotatable about a central gear unit axis of rotation (37) and bears an external toothing (6), and a ring gear (7) which is arranged in the gear unit housing (2) concentrically with respect to the central gear unit axis of rotation (37) and has an internal toothing (8), **characterized in that** the planetary gear unit has a single-cheek planet carrier (9) which is mounted in the gear unit housing (2) so as to be rotatable about the central gear unit axis of rotation (37) and has a plurality of planetary gears (13) which are mounted on the planet carrier (9) so as to be rotatable about planetary gear axes of rotation (36) by means of planetary gear bearings (12), which are configured as plain bearings, and have external toothings (14) which are in engagement with the internal toothing (8) of the ring gear (7) and the external toothing (6) of the sun gear (5), each planetary gear bearing (12) having two annular bearing bodies (12a, 12b), at least one of the annular bearing bodies (12b) being penetrated by a planetary gear axle (11) and being held rotationally fixed thereon, sliding surfaces in the shape of conical surfaces being formed on the outer circumferential surfaces of the bearing bodies (12a, 12b) in such a manner that the tapered ends of the bearing bodies (12a, 12b) face each other, and running surfaces (20a, 20b) corresponding to the sliding surfaces of the planetary gear bearing (12) being formed on inner circumferential surfaces of the planetary gear (13).

2. Planetary gear unit (1) according to Claim 1, having a first end side (31) and a second end side (32), the single-cheek planet carrier (9) being in the region of the first end side (31), and the at least one annular bearing body (12b), which is penetrated by the planetary gear axle (11) and is held rotationally fixed thereon, being decoupled mechanically from a further planetary gear (13) on the second end side (32).

3. Planetary gear unit (1) according to Claim 1 or 2, wherein the bearing bodies (12a, 12b) are arranged spaced apart axially.

4. Planetary gear unit (1) according to one of the preceding claims, wherein a locking ring (30) locks at least one bearing body (12a, 12b) on the planetary gear axle (11).

5. Planetary gear unit (1) according to one of the preceding claims, wherein the planetary gear axle (11) is a flex pin (34) with a hollow cylinder (35).

6. Planetary gear unit (1) according to Claim 5, wherein the flex pin (34) has a lubricant line (38).

7. Planetary gear unit (1) according to one of the preceding claims, wherein there is a lubricating gap between the sliding surfaces of the planetary gear bearing (12) and the corresponding running surfaces (20a, 20b) of the mounted planetary gear (13), a first of said lubricating gaps being different from the second of said lubricating gaps.

8. Planetary gear unit (1) according to Claim 7, wherein first lubricating gap and second lubricating gap differ in axial length.

9. Planetary gear unit (1) according to Claim 7 or 8, wherein at least one of the lubricating gaps has different heights axially.

10. Planetary gear unit (1) according to one of Claims 7 to 9, wherein the first lubricating gap has a different bevel with respect to the axis of rotation (36) of the planetary gear (13) than the second lubricating gap.

11. Planetary gear unit according to one of the preceding claims, wherein at least one bearing body (12a, 12b) is adjustable in the axial direction in order to set a lubricating gap of defined height (S) between the sliding surfaces of the planetary gear bearing (12) and the corresponding running surfaces (20) of the mounted planetary gear (13).

12. Planetary gear unit (1) according to one of the preceding claims, wherein precisely one bearing body (12a, 12b) is adjustable and the other bearing body (12a, 12b) has an axially fixed position.

13. Planetary gear unit (1) according to Claim 12, wherein the axial position of the axially fixed bearing body (12a, 12b) is defined by an axial stop (40), in particular a radial annular shoulder (29), which is formed on the planetary gear axle (11), of the planet carrier (9).

14. Planetary gear unit (1) according to either of Claims 12 and 13, **characterized in that** the adjustable bearing body (12a, 12b) is assigned adjustment means (26, 27, 28) for adjustment axially.

15. Planetary gear unit (1) according to Claim 14, **characterized in that** spacer elements (26) which are arranged between a bearing body (12a, 12b) and the adjacent cheek (10) of the planet carrier (9) and/or between the bearing bodies (12a, 12b) are provided as the adjustment means.

16. Planetary gear unit (1) according to one of Claims 12 to 15, **characterized in that** the adjustable bearing body (12a, 12b) is screwed onto the planetary gear axle (11).

17. Planetary gear unit (1) according to one of Claims 12 to 15, **characterized in that** the adjustable bearing body (12a, 12b) is screwed into the adjacent cheek (10) of the planet carrier (9).

18. Planetary gear unit (1) according to either of Claims 16 and 17, **characterized in that** an anti-rotation lock (28) is provided by means of which the adjustable bearing body (12a, 12b) can be secured axially.

19. Planetary gear unit (1) according to one of the preceding claims, **characterized in that** in each sliding surface is formed at least one lubricating pocket (19) into which a lubricating channel (17) that penetrates the bearing body (12a, 12b) radially leads, the lubricating channel (17) being connected to an eccentric lubricant supply channel (18) which is formed in the planetary gear axle (11) and penetrates the latter axially.

20. Planetary gear unit (1) according to one of the preceding claims, **characterized in that** a spacer ring (21) is arranged between the bearing bodies (12a, 12b), the spacer ring engaging around the planetary gear axle (11) and defining a minimum axial distance between the bearing bodies (12a, 12b) .

21. Planetary gear unit (1) according to Claim 20, **characterized in that** an annular lubricantcollecting groove (22) is formed on an inner circumferential surface of the spacer ring (21).

22. Planetary gear unit (1) according to Claim 21, **characterized in that** a plurality of lubricant channels (23) which lead into the lubricantcollecting groove (22) are formed in the spacer ring (21) .

23. Planetary gear unit (1) according to Claim 22, **characterized in that** a central lubricant supply channel (24) which leads into the lubricantcollecting groove (22) of the spacer ring (21) is formed in the planetary gear axle (11).

## Revendications

1. Engrenage planétaire (1), notamment pour une installation d'énergie éolienne, comprenant un carter d'engrenage (2), une roue solaire centrale (5) qui est maintenue dans le carter d'engrenage (2) de manière à pouvoir tourner autour d'un axe de rotation d'engrenage central (37) et qui porte une denture extérieure (6), une couronne (7) qui est agencée dans le carter d'engrenage (2) concentriquement à l'axe de rotation d'engrenage central (37) et qui présente une denture intérieure (8), **caractérisé en ce que** l'engrenage planétaire présente un porte-satellites (9) à un flasque, qui est monté dans le carter d'engrenage (2) de manière à pouvoir tourner autour de l'axe de rotation d'engrenage central (37), et présente plusieurs satellites (13) qui sont montés sur le porte-satellites (9) de manière à pouvoir tourner autour d'axes de rotation de satellites (36) au moyen de paliers de satellites (12) conçus sous forme de paliers lisses et présentent des dentures extérieures (14), qui sont en prise avec la denture intérieure (8) de la couronne (7) et la denture extérieure (6) de la roue solaire (5), chaque palier de satellite (12) présentant deux corps de palier annulaires (12a, 12b), au moins l'un des corps de palier annulaires (12b) étant traversé par un axe de satellite (11) et maintenu de manière solidaire en rotation sur celui-ci, des surfaces de glissement en forme d'enveloppe de cône étant formées sur les surfaces périphériques extérieures des corps de palier (12a, 12b) de telle sorte que les extrémités effilées des corps de palier (12a, 12b) sont orientées l'une vers l'autre, et des surfaces de roulement (20a, 20b) correspondant aux surfaces de glissement du palier de satellite (12) étant formées sur les surfaces périphériques intérieures du satellite (13).

2. Engrenage planétaire (1) selon la revendication 1, avec un premier côté frontal (31) et un deuxième côté frontal (32), le porte-satellites (9) à un flasque se trouvant dans la zone du premier côté frontal (31), l'au moins un corps de palier annulaire (12b), qui est traversé par l'axe de satellite (11) et est maintenu de manière solidaire en rotation sur celui-ci, étant découplé mécaniquement d'un autre satellite (13) sur le deuxième côté frontal (32).

3. Engrenage planétaire (1) selon la revendication 1 ou 2, dans lequel les corps de palier (12a, 12b) sont agencés à distance axialement.

4. Engrenage planétaire (1) selon l'une quelconque des revendications précédentes, dans lequel une bague d'arrêt (30) bloque au moins un corps de palier (12a, 12b) sur l'axe de satellite (11).

5. Engrenage planétaire (1) selon l'une quelconque des revendications précédentes, dans lequel l'axe de satellite (11) est un Flex-Pin (34) avec un cylindre creux (35).

6. Engrenage planétaire (1) selon la revendication 5, dans lequel le Flex-Pin (34) présente un conduit de lubrifiant (38).

7. Engrenage planétaire (1) selon l'une quelconque des revendications précédentes, dans lequel un espace de lubrification se trouve entre les surfaces de glissement du palier de satellite (12) et les surfaces de roulement correspondantes (20a, 20b) du satellite (13) monté, un premier de ces espaces de lubrification étant différent du deuxième de ces espaces de lubrification.

8. Engrenage planétaire (1) selon la revendication 7, dans lequel le premier espace de lubrification et le deuxième espace de lubrification présentent une longueur axiale différente.

9. Engrenage planétaire (1) selon la revendication 7 ou 8, dans lequel au moins l'un des espaces de lubrification a une hauteur axialement différente.

10. Engrenage planétaire (1) selon l'une quelconque des revendications 7 à 9, dans lequel le premier espace de lubrification présente une inclinaison différente de celle du deuxième espace de lubrification par rapport à l'axe de rotation (36) du satellite (13).

11. Engrenage planétaire selon l'une quelconque des revendications précédentes, dans lequel au moins un corps de palier (12a, 12b) est réglable dans la direction axiale afin de régler un espace de lubrification de hauteur (S) définie entre les surfaces de glissement du palier de satellite (12) et les surfaces de roulement (20) correspondantes du satellite (13) monté.

12. Engrenage planétaire (1) selon l'une quelconque des revendications précédentes, dans lequel exactement un corps de palier (12a, 12b) est réglable et l'autre corps de palier (12a, 12b) présente une position axialement fixe.

13. Engrenage planétaire (1) selon la revendication 12, dans lequel la position axiale du corps de palier axialement fixe (12a, 12b) est définie par une butée axiale (40), notamment un épaulement annulaire radial (29) du porte-satellites (9) formé sur l'axe de satellite (11) .

14. Engrenage planétaire (1) selon l'une quelconque des revendications 12 à 13, **caractérisé en ce que** des moyens d'ajustement (26, 27, 28) sont associés au corps de palier réglable (12a, 12b) pour le réglage axial.

15. Engrenage planétaire (1) selon la revendication 14, **caractérisé en ce que** des éléments d'écartement (26) sont prévus en tant que moyens d'ajustement, qui sont agencés entre un corps de palier (12a, 12b) et le flasque (10) voisin du porte-satellites (9) et/ou entre les corps de palier (12a, 12b).

16. Engrenage planétaire (1) selon l'une quelconque des revendications 12 à 15, **caractérisé en ce que** le corps de palier réglable (12a, 12b) est vissé sur l'axe de satellite (11).

17. Engrenage planétaire (1) selon l'une quelconque des revendications 12 à 15, **caractérisé en ce que** le corps de palier réglable (12a, 12b) est vissé dans le flasque (10) voisin du porte-satellites (9).

18. Engrenage planétaire (1) selon l'une quelconque des revendications 16 ou 17, **caractérisé en ce qu'**un dispositif anti-rotation (28) est prévu, au moyen duquel le corps de palier réglable (12a, 12b) peut être fixé axialement.

19. Engrenage planétaire (1) selon l'une quelconque des revendications précédentes, **caractérisé en ce que** dans chaque surface de glissement est formée au moins une poche de lubrification (19) dans laquelle débouche un canal de lubrifiant (17) qui traverse radialement le corps de palier (12a, 12b), le canal de lubrifiant (17) étant relié à un canal d'alimentation en lubrifiant excentrique (18) qui est formé dans l'axe de satellite (11) et qui traverse axialement celui-ci.

20. Engrenage planétaire (1) selon l'une quelconque des revendications précédentes, **caractérisé en ce qu'**entre les corps de palier (12a, 12b) est agencée une bague d'écartement (21) qui entoure l'axe de satellite (11) et définit une distance axiale minimale entre les corps de palier (12a, 12b).

21. Engrenage planétaire (1) selon la revendication 20, **caractérisé en ce qu'**une rainure annulaire de collecte de lubrifiant (22) est formée sur une surface périphérique intérieure de la bague d'écartement (21).

22. Engrenage planétaire (1) selon la revendication 21, **caractérisé en ce qu'**une pluralité de canaux de lubrifiant (23) sont formés dans la bague d'écartement (21), qui débouchent dans la rainure de collecte de lubrifiant (22).

23. Engrenage planétaire (1) selon la revendication 22, **caractérisé en ce qu'**un canal central d'alimentation en lubrifiant (24) est formé dans l'axe de satellite (11), qui débouche dans la rainure de collecte de lubrifiant (22) de la bague d'écartement (21).
